# EUROPEAN PATENT APPLICATION

(11) **EP 1 587 060 A1**
(43) Date of publication of application: **19.10.2005**
(21) Application number: 03768231.7
(22) Date of filing: 25.12.2003
(51) Int. Cl.: G10K 15/04, H04N 5/93, G11B 20/10

(54) **METHOD AND DEVICE FOR RECORDING, TRANSMITTING, OR REPRODUCING DATA**

(30) Priority: 21.01.2003 JP 2003012508
(71) Applicant: SONY CORPORATION, Tokyo 141-0001 (JP)
(72) Inventor: SAKO, Yoichiro, Sony Corporation, Shinagawa-ku, Tokyo 141-0001 (JP); TAKAI, Motoyuki, Sony Corporation, Shinagawa-ku, Tokyo 141-0001 (JP); MIURA, Masayoshi, Sony Corporation, Shinagawa-ku, Tokyo 141-0001 (JP); YABE, Susumu, Sony Corporation, Shinagawa-ku, Tokyo 141-0001 (JP); INOUE, Akiko, Sony Corporation, Shinagawa-ku, Tokyo 141-0001 (JP)
(74) Representative: Müller - Hoffmann & Partner
(86) International application number: PCT/JP2003/016729
(87) International publication number: WO 2004/066265

(57) **Abstract**

Reproduction AV data obtained from an optical disc 41 is stored into a RAM 50. An AV signal whose reproduction start timing has been controlled is outputted from the RAM 50. Breath of a viewer is measured by a sensor 61. A measured signal is supplied to a peak detecting circuit 63 through a low pass filter 62 and timing of a peak value is detected. On the basis of the detected peak value, a change point detecting circuit 64 detects a change point from an inspiratory period to an expiratory period of the breath of the viewer and forms a reproduction start signal. The reproduction start signal is supplied to the RAM 50. Reading timing of the AV signal from the RAM 50 is controlled to the timing synchronized with the reproduction start signal. By controlling the start timing of the AV information in accordance with organic information of the viewer, a situation in which the timing is synchronized with the actual performance or the breath, excitement degree, or the like upon acting can be reconstructed.

## Description

### Technical Field

The invention relates to a method and an apparatus regarding recording, transmission, or reproduction of data which are applied to record, transmit, or reproduce data of at least either audio information or video information.

### Background Art

It has empirically been known that when listening to a performance of, for example, an orchestra in a concert hall, the listener observes a baton of a conductor and predicts start timing of a music piece which is played in accordance with his baton. Therefore, the listener can catch his own breath and listen to the played music piece without a sense of discomfort.

Hitherto, a performance control apparatus for changing music into music to be comfortable to the ear by adding a fluctuation of 1/f as a human organic rhythm to the original music has been proposed. For example, a technique in which considering that a human organic state, its physical condition, and the like change minute by minute, a fluctuation control signal according to a daily organic state of the listener is formed and a performing tempo of an audio program is edited on the basis of the fluctuation control signal has been described in Patent Document 1 (JP-A-10-79130).

If the timing of a start point of the music piece and that of organic information of the listener, for example, breath or the like do not coincide, the breaths of the performers such as a conductor and the like and that of the listener do not coincide either, and information given by the performers is not conveyed to the listener enough, so that there is a fear that the listener does not feel the presence enough or he can feel uncomfortable in certain cases. According to the above Patent Document 1, the performing tempo of the music is controlled by using the organic information regarding the health of the listener, but nothing is disclosed about synchronization between the timing of the music piece to be reproduced and the breath of the listener, thereby enabling him to feel the music more lively.

It is, therefore, an object of the invention to provide a method and an apparatus regarding recording, transmission, or reproduction of data which can realize reproduction full of liveliness by synchronizing timing of a music piece with organic information of the listener, for example, breath.

### Disclosure of Invention

To accomplish the above object, according to the invention of Claim 1, there is provided a data reproduction instructing apparatus comprising:
reproducing means for reproducing data;
detecting means for detecting organic information; and
instructing means for instructing timing to start the reproduction of the data on the basis of the detected organic information.

According to the invention of Claim 7, there is provided a data reproducing apparatus comprising:
reproducing means for reproducing data;
detecting means for detecting organic information; and
control means for controlling timing to start the reproduction of the data on the basis of the detected organic information.

According to the invention of Claim 16, there is provided a data transmission instructing apparatus comprising:
transmitting means for transmitting data;
detecting means for detecting organic information; and
instructing means for instructing timing to transmit the data on the basis of the detected organic information.

According to the invention of Claim 17, there is provided a data transmitting apparatus comprising:
transmitting means for transmitting data;
detecting means for detecting organic information; and
control means for controlling transmission timing to transmit the data on the basis of the detected organic information.

According to the invention of Claim 18, there is provided a data recording instructing apparatus comprising:
recording means for recording data onto a recording medium;
detecting means for detecting organic information; and
instructing means for instructing timing to record the data on the basis of the detected organic information.

According to the invention of Claim 19, there is provided a data recording apparatus comprising:
recording means for recording data onto a recording medium;
detecting means for detecting organic information; and
control means for controlling timing to record the data on the basis of the detected organic information.

According to the invention of Claim 21, there is provided a data reproduction instructing method comprising the steps of:
detecting organic information when data is reproduced; and
instructing timing to reproduce the data on the basis of the detected organic information.

According to the invention of Claim 22, there is provided a data reproducing method comprising the steps of:
detecting organic information when data is reproduced; and
controlling reproduction timing to reproduce the data on the basis of the detected organic information.

According to the invention of Claim 23, there is provided a data recording instructing method comprising the steps of:
detecting organic information; and
instructing timing to record data on the basis of the detected organic information.

According to the invention of Claim 24, there is provided a data recording method comprising the steps of:
detecting organic information;
controlling timing to record data on the basis of the detected organic information; and
recording the data onto a recording medium on the basis of the timing.

### Brief Description of Drawings

Figs. 1A and 1B are schematic diagrams for explaining reproduction start timing in the invention.
Fig. 2 is a block diagram showing a construction for detecting a breath signal as an organism signal.
Fig. 3 is a block diagram showing a construction for detecting a heartbeat signal as an organism signal.
Fig. 4 is a block diagram showing a construction of an embodiment of a reproduction instructing apparatus according to the invention.
Fig. 5 is a block diagram showing a construction of an embodiment of a reproducing apparatus according to the invention.
Fig. 6 is a block diagram showing a more detailed construction of the embodiment of the reproducing apparatus.
Fig. 7 is a block diagram showing a construction of an embodiment of recording/transmission and a recording/transmission instructing apparatus according to the invention.

### Best Mode for Carrying Out the Invention

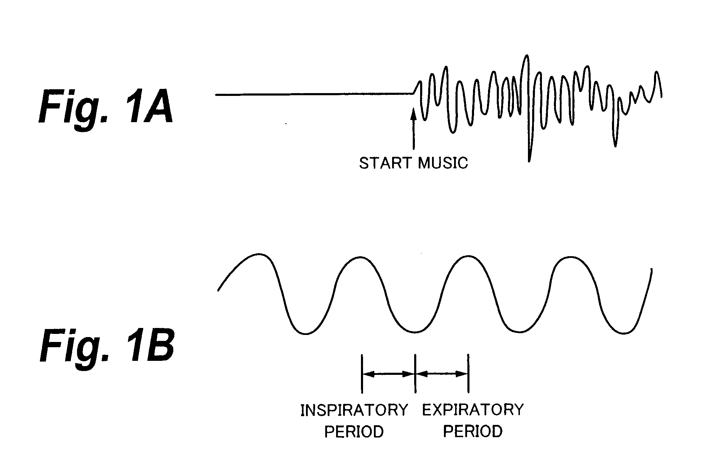

An embodiment of the invention will be described hereinbelow. Figs. 1A and 1B schematically show the state where start timing of data (properly abbreviated to AV data) such as a music signal of at least either audio information or video information is synchronized with a period of organic information such as a breath signal of a viewer. In the example of Figs. 1A and 1B, the timing when the viewer starts to exhale the breath after completion of the aspiration is synchronized with the start timing of the music signal. By realizing such a relation, the breath of a performer of a music and that of the viewer are almost synchronized with each other. Consequently, in a manner similar to the case where the viewer synchronizes his own breath with the operation of the performer in a concert hall, he can synchronize his own breath with that of the performer or actor of the AV information which is reproduced.

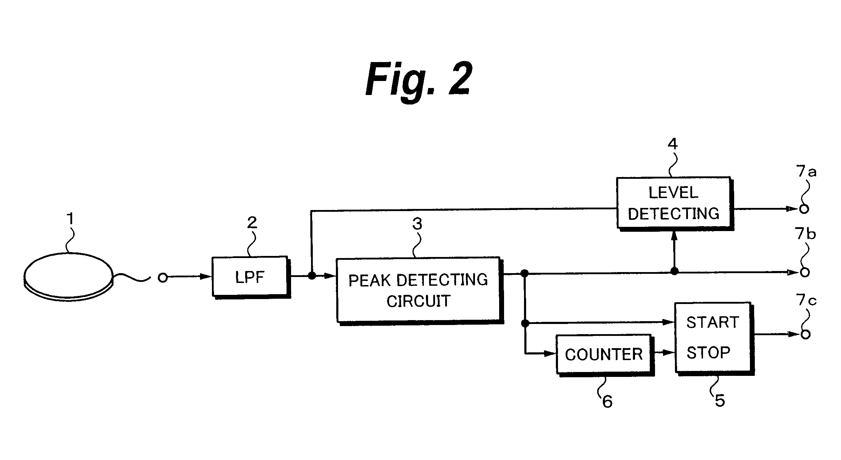

The organic information of the viewer is at least one of a body motion, breath, heartbeat, and a pulsation. Fig. 2 shows a constructional example for detecting, for example, the breath of the viewer. To measure a flow rate and a flow amount of breathing gases, a method of measuring them by attaching an airspeed indicator and an air flowmeter onto a passage of an air current has been known. In the example of Fig. 2, a method of electrically detecting a chest motion is used to enable a cheaper and simpler measurement.

In Fig. 2, reference numeral 1 denotes a sensor for detecting the motion of the chest region associated by a respiratory movement. For example, the breath is measured from a change in organic electric impedance associated by the breath. In this case, four electrodes are attached to the chest region, a current is supplied from a pair of outside electrodes, and an electric potential is detected from a pair of inside electrodes. As another method, a method of attaching a sensor such as a strain gauge or the like to the chest region or the like can be also used to detect a volume change of the chest region associated by the respiratory movement.

A detection signal whose amplitude changes in accordance with the respiratory movement is generated from the sensor 1. The detection signal is supplied to a low pass filter 2 and unnecessary signal components such as noises and the like are removed. It is preferable that the signal from the sensor 1 is transmitted to the low pass filter 12 in a wireless manner so that a cable does not become an obstacle to the movement of the viewer. An output signal of the low pass filter 2 is supplied to a peak detecting circuit 3 and a level detecting circuit 4. In the peak detecting circuit 3, a peak value of the positive side and the negative side are detected, respectively. As shown in Fig. 1B, the detection signal is an almost sine wave, a period from the positive peak value to the negative peak value is an aspiration period (inspiratory period), and a period from the negative peak value to the positive peak value is an exhaling period (expiratory period).

The detection signal from the peak detecting circuit 3 is supplied to the level detecting circuit 4. The level detecting circuit 4 detects a level of the detection signal of the timing of the peak value. A signal showing the detected level is taken out to an output terminal 7a. The signal derived from the output terminal 7a is a signal showing a depth of breath. The detection output of the peak detecting circuit 3 is taken out to an output terminal 7b. For example, a pulse signal which is generated at the timing of the positive peak value and a pulse signal which is generated at the timing of the negative peak value are taken out as a detection output to the output terminal 7b. The detection output derived from the output terminal 7b is used as a timing signal.

Further, the output signal of the peak detecting circuit 3 is supplied as a start signal to a timer 5 and inputted to a counter 6. An output of the counter 6 is supplied as a stop signal to the timer 5. When the counter 6 counts (n) peak signals, it generates the stop signal to the timer 5. Therefore, a detection signal is generated from the timer 5 every (n) peak values. The detection signal which is outputted from the timer 5 is extracted as a breath interval signal to an output terminal 7c. As mentioned above, the breath depth signal, the breath timing signal, and the breath interval signal are outputted from the output terminals 7a, 7b, and 7c, respectively.

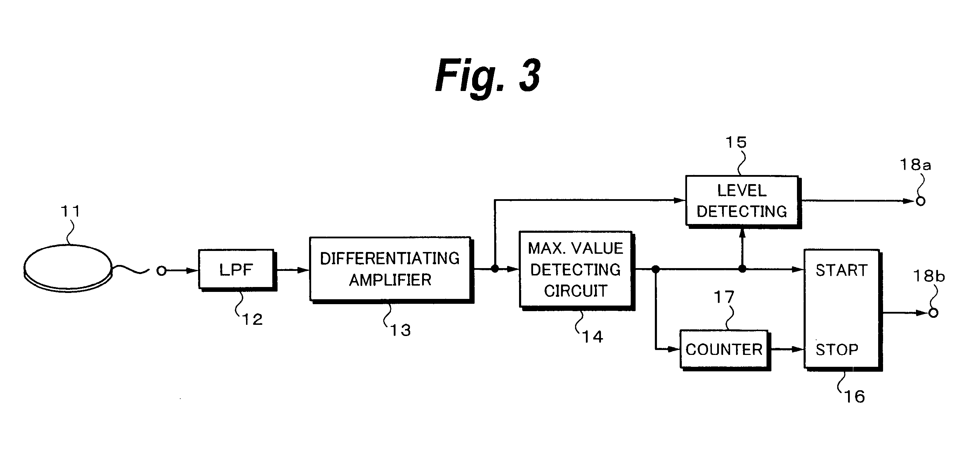

Fig. 3 shows a constructional example for measuring heartbeat as organic information. For example, a current supplying electrode is attached near the neck, a detecting electrode is attached to the chest region, and a high-frequency constant current is supplied. Reference numeral 11 denotes a detecting electrode. A detection current from the detecting electrode 11 is converted into a voltage or a signal of an impedance change as necessary and supplied to a low pass filter 12. It is desirable that the signal from the detecting electrode 11 is transmitted to the low pass filter 12 in a wireless manner. Unnecessary components such as noises and the like are removed by the low pass filter 12. The motion of the chest can be also detected by using a pressure sensor attached near the heart.

An output signal of the low pass filter 12 is supplied to a differentiating amplifier 13. A signal in which the detection signal has been primary-differentiated is obtained by the differentiating amplifier 13. The differentiation signal is supplied to a maximum value detecting circuit 14 and a level detecting circuit 15. The maximum value detecting circuit 14 generates a pulse signal which is generated at the timing of the maximum value. The pulse signal is supplied to the level detecting circuit 15. The level detecting circuit 15 detects a level of the differentiation signal of the timing of the pulse signal and outputs it to an output terminal 18a. An output signal obtained at the output terminal 18a is a detection signal showing an intensity of the heartbeat.

An output of the maximum value detecting circuit 14 is supplied as a start signal of a timer 16. The output of the maximum value detecting circuit 14 is counted by a counter 17. A signal which is outputted from the counter 17 when the (n) maximum values are detected is supplied as a stop signal to the timer 16. An output signalof the timer 16 is taken out to an output terminal 18b. A detection signal taken out to the output terminal 18b is a signal indicative of a heartbeat period.

Other organic information, for example, a pulsation can be measured by using an ultrasonic wave. A body motion can be used as organic information. Light-emitting devices (for example, light-emitting diodes which flicker at a predetermined period) are attached to one or a plurality of portions of the body to be measured. By photographing the light-emitting devices and detecting the positions of the light-emitting devices on a two-dimensional photographing plane, the body motion can be measured and the timing of the maximum value of the body motion is measured. The timing is controlled so that the timing of the maximum value of the body motion coincides with the start timing of reproduction.

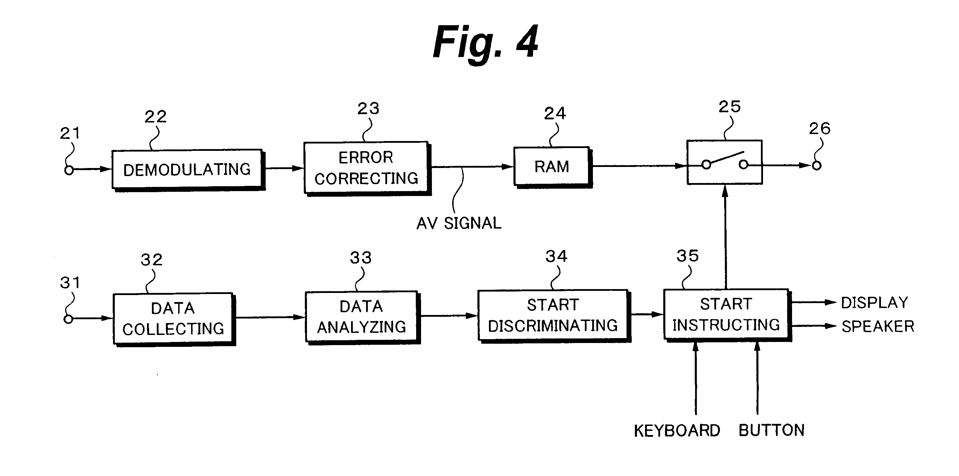

Fig. 4 shows an embodiment of a reproduction instructing apparatus according to the invention. An input signal reproduced from a recording media or received through a network is supplied to an input terminal 21. The input AV signal is demodulated by a demodulating circuit 22 and subjected to an error correcting process by an error correcting circuit 23. When the input signal is, for example, a reproduction signal of a CD (Compact Disc), the demodulating circuit 22 executes demodulation of an EFM modulation system (Eight to Fourteen Modulation: EFM). The error correcting circuit 23 is a decoder of a CIRC (Cross Interleaved Reed-Solomon Code).

The AV signal obtained from the error correcting circuit 23 is written into a RAM (Random Access Memory) 24. A read output of the RAM 24 is taken out to an output terminal 26 through a switch 25. The switch 25 is turned on at the start of the reading of the RAM 24 which is instructed by a reproduction start signal. Actually, the reproduction start signal is inputted to a control circuit of the RAM 24. The switch 25 is shown as a schematic construction. The RAM 24 stores the whole portion of one music piece. In the case of a storage having a large capacity, a plurality of music pieces can be stored, or a RAM having a capacity for deviation correction of a length smaller than one music piece can be also used.

An organism signal of the viewer, for example, a breath signal is supplied from an input terminal 31 and supplied to a data collecting unit 32. The data collecting unit 32 collects the data of the organism signal, thereby enabling various processing data such as average value of a predetermined interval, maximum value, statistic data, and the like to be obtained in a data analyzing unit 33 at the next stage. For example, the organism signal of a time of a duration of a certain degree of one viewer is collected and analyzed. The data analyzing unit 33 has, for example, a construction as described with reference to Fig. 2.

Data of an analysis result (breath depth output, breath timing output, breath interval output, and the like) of the data analyzing unit 33 is inputted to a start discriminating unit 34. The start discriminating unit 34 decides the timing to start the reproduction and outputs a signal to control a start instructing unit 35.

The start instructing unit 35 outputs a start instructing signal to a display and/or a speaker. As a simple display, there is a light-emitting device such as a light-emitting diode or the like. As another display, a display which displays characters on a display screen can be used. The light-emitting device is lit on every start timing or characters showing the start are displayed. By watching the display, the viewer operates a keyboard or a button and allows the start instructing unit 35 to generate the reproduction start signal. The switch unit 25 is turned on by the reproduction start signal and the reading of the AV data stored in the RAM 24 is started. The speaker reproduces audio information, a buzzer, or the like indicative of the reproduction start timing. The viewer listens to the audio information, the buzzer, or the like and presses the keyboard or button, so that the reproduction is started.

A part or all of the data analyzing unit 33, start discriminating unit 34, and start instructing unit 35 can be also automatically executed by hardware processes or software processes without executing the artificial operation.

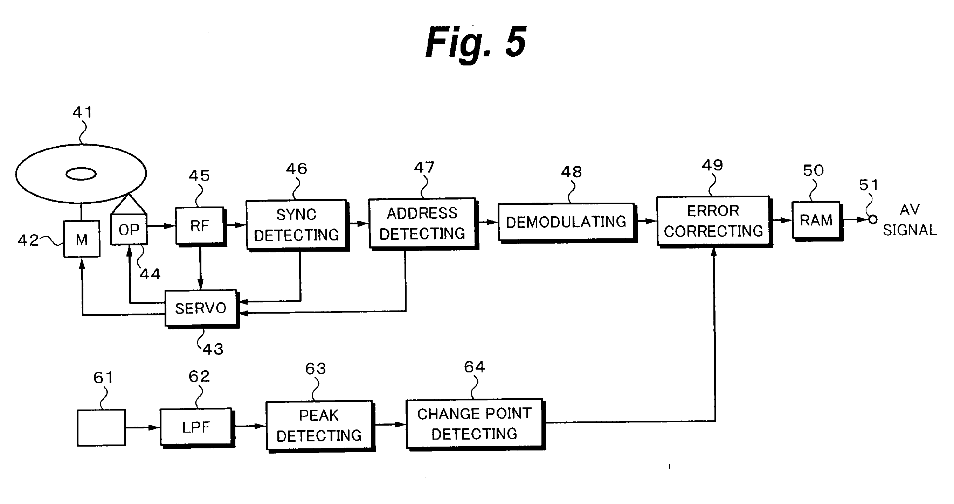

An embodiment of a data reproducing apparatus according to the invention will now be described with reference to Fig. 5. Reference numeral 41 denotes an optical disc on which the AV information has been recorded. The optical disc 41 is put on a turntable and rotated by a spindle motor 42. The spindle motor 42 is rotated at a constant linear velocity (CLV) or a constant angular velocity (CAV) by control of a servo unit 43.

On the basis of a focusing error signal, a tracking error signal, and an operating instruction from a controller (not shown), the servo unit 43 forms various servo drive signals of focusing, tracking, sled, and spindle and outputs them to the spindle motor 42 and an optical pickup 44. Although not shown, the controller is used to control the whole reproducing apparatus. The display, operation switches, and the like are connected to the controller. While converging a light beam of a semiconductor laser onto a signal surface of the optical disc 41, the optical pickup 44 traces tracks formed concentrically or spirally on the optical disc 41. The whole optical pickup 44 is moved by a sled mechanism.

An output of the optical pickup 44 is supplied to a sync detector 46 through an RF amplifier 45. An output of the sync detector 46 is supplied to an address detecting circuit 47. A servo signal from the RF amplifier 45, a detection signal from the sync detecting circuit 46, and an address signal from the address detecting circuit 47 are supplied to the servo unit 43.

An output signal of the address detecting circuit 47 is supplied to a demodulator 48 of, for example, EFM. An output of the demodulator 48 is supplied to an error correcting circuit 49. The error correcting circuit 49 corrects errors and interpolates the uncorrectable errors as necessary. The AV data from the error correcting circuit 49 is stored in a RAM 50. The AV signal whose reproduction start timing has been controlled is taken out to an output terminal 51 from the RAM 50. The output AV signal is supplied to a reproducing apparatus such as amplifier, speaker, display, or the like and the AV signal is reproduced.

Reference numeral 61 denotes a sensor for measuring the breath of the viewer who monitors the AV information reproduced from the optical disc 41. A detection signal is supplied to a low pass filter 62 from the sensor 61 in a wired or wireless manner. An output signal of the low pass filter 62 is supplied to a peak detecting circuit 63. The timing of the positive peak value and the timing of the negative peak value are detected by the peak detecting circuit 63. The detected signal is supplied to a change point detecting circuit 64.

The change point detecting circuit 64 detects a change point from the inspiratory period to the expiratory period of the breath of the viewer and forms the reproduction start signal having the timing of the change point. The reproduction start signal is supplied to the RAM 50. The reading timing of the AV signal from the RAM 50 is controlled to the timing synchronized with the reproduction start signal. The control of the reproduction start is not limited to the start timing of the music piece but reproduction start timing of each movement, start timing of the portion having high importance (highlight portion) in the music piece, or the like can be also synchronized with the organic information.

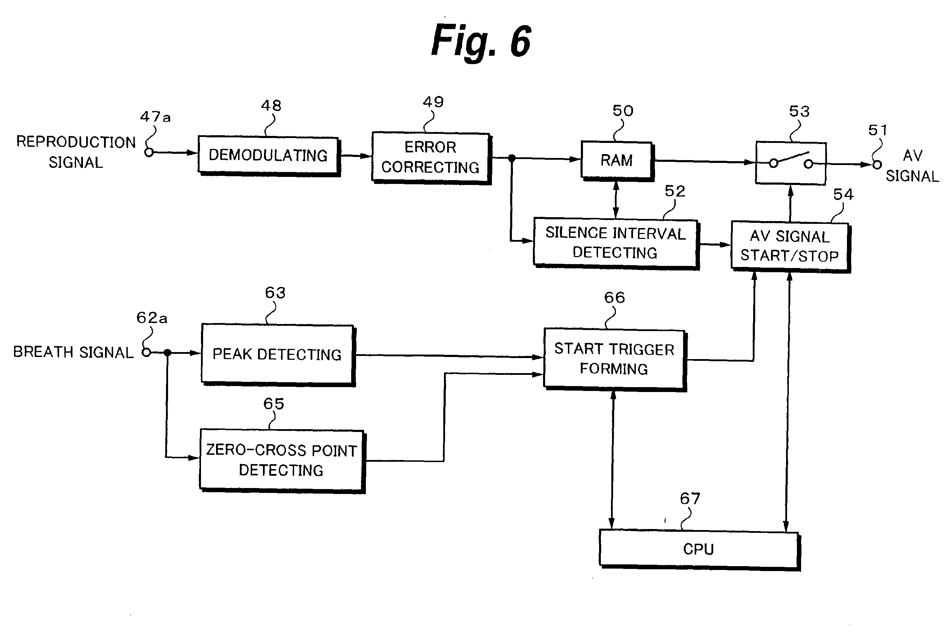

Fig. 6 shows a more detailed constructional example of the embodiment of the reproduction control apparatus mentioned above. The reproduction signal of the optical disc 41 is supplied from the address detecting circuit 47 (refer to Fig. 5) through an input terminal 47a. The reproduction AV signal is obtained by the demodulating circuit 48 and the error correcting circuit 49 and written into the RAM 50. The reproduction AV signal is supplied to a silence interval detecting circuit 52.

In the case of audio, the silence interval detecting circuit 52 detects a silence interval from the start timing to a sound interval, a silence interval between the music pieces, and a silence interval between the movements. For example, the silence interval of one second or more is detected. In the case of video, an interval without an image instead of the sound is detected. The silence interval detecting circuit 52 is provided for detecting the interval from the start timing to the start timing of the sound interval and delaying the start timing by the time corresponding to a duration of the detected silence interval, thereby preventing the start timing from being asynchronized with the organism signal due to the existence of the silence interval.

The read signal from the RAM 50 is taken out to the output terminal 51 through a switch 53. The switch 53 changes from OFF to ON at the start of the reproduction. The on/off operations of the switch 53 are controlled by a switch control signal from an AV signal start/stop unit 54.

The breath signal from which the noises have been removed by the low pass filter 62 is inputted to an input terminal 62a. The positive and negative peak values and the maximum and minimum values of the peak values are detected by the peak detecting circuit 63. The breath signal from the input terminal 62a is supplied to a zero-cross point detecting circuit 65 and a zero-cross point is detected.

Detection outputs of the peak detecting circuit 63 and the zero-cross point detecting circuit 65 are supplied to a start trigger forming circuit 66. The start trigger forming circuit 66 generates a reproduction start trigger. The start trigger is supplied to the AV signal start/stop unit 54. When the AV signal start/stop unit 54 receives the start trigger, it outputs a start signal for turning on the switch 53 at the timing when the silence interval which is inputted from the silence interval detecting circuit 52 changes to the sound interval. In the case of video, when the start trigger is received, the start signal to turn on the switch 53 is outputted at the timing when the image changes from the interval without the image to the interval with the image.

As mentioned above, the start signal is generated at the timing when the breath changes from the inspiratory period to the expiratory period, that is, the timing of the peak of the inspiratory period (the negative peak value in the waveform of Fig. 1B). However, there is a case where it is more preferable to start the reproduction at timing different from the above timing in dependence on the individual differences of the viewers, physical condition at that time of the viewer, or the like.

For example, there can be a case where the viewer feels better when starting the reproduction at the timing of the peak of the expiratory period or the timing of the zero-cross point. In consideration of such a point, in the constructional example of Fig. 6, the zero-cross point detecting circuit 65 is provided and a generating method of the start trigger can be switched by a controller 67 to control the whole reproducing system. Further, the controller 67 outputs a reproduction stop instruction generated by the operation or the like of the viewer to the start/stop unit 54, thereby stopping the reproduction of the AV signal.

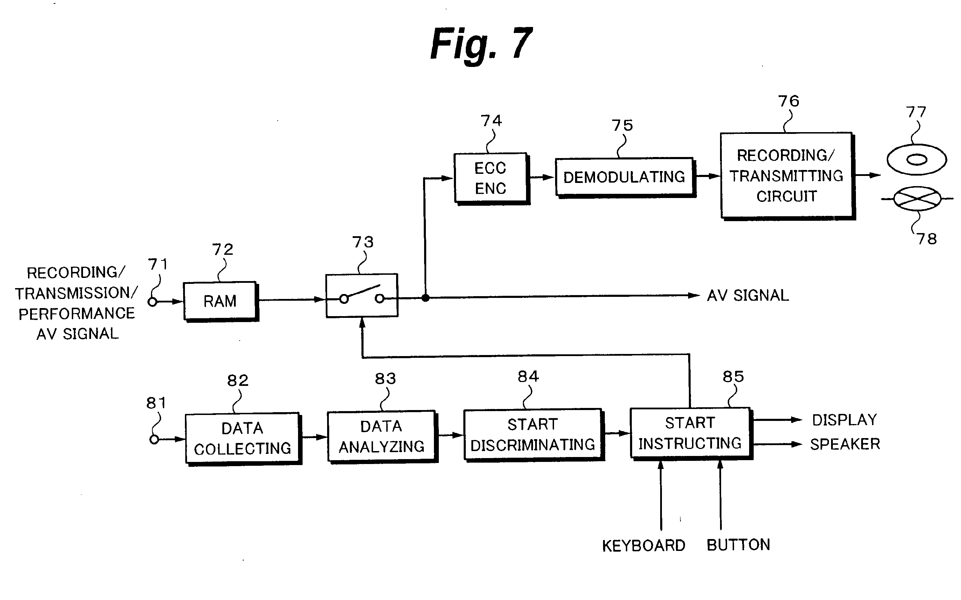

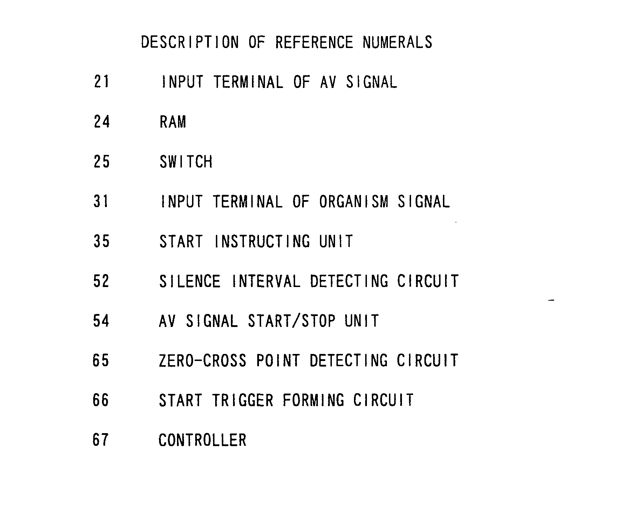

Fig. 7 is a diagram for explaining a constructional example in the case of applying the invention to a recording instructing apparatus, a transmission instructing apparatus, a recording apparatus, and a transmitting apparatus. Since a construction of the recording and that of the transmission are similar, an expression of recording/transmission is used as an expression which denotes either the recording or the transmission. Further, the construction of Fig. 7 is made in consideration of the case where the music is performed on the recording/transmission side and a performance signal is recorded/transmitted.

The recording/transmission/performance AV signal is inputted to an input terminal shown at reference numeral 71 and stored into a RAM 72. A read output from the RAM 72 is outputted as an AV signal through a switch 73 and supplied to an encoder 74 for error correction. The output AV signal is an AV signal which is supplied to a speaker through an amplifier (not shown) and directly generated in a concert hall. An output signal of the encoder 74 is supplied to a modulating circuit 75. The signal modulated by the modulating circuit 75 is supplied to a recording/transmitting circuit 76. The recording signal from the recording/transmitting circuit 76 is recorded onto a media 77 such as an optical disc or the like. The transmission signal is transmitted to a network 78.

The organism signal, for example, the breath signal of the viewer who monitors the AV signal outputted through the switch 73 is inputted to an input terminal shown at reference numeral 81. The organism signal is supplied to a data collecting unit 82. Data of an analysis result (breath depth output, breath timing output, breath interval output, and the like) of a data analyzing unit 83 is inputted to a start discriminating unit 84. The start discriminating unit 84 decides the timing to start the recording/transmission/performance and outputs a signal to control a start instructing unit 85.

The start instructing unit 85 outputs the start instructing signal to the display and/or the speaker. As a simple display, the light-emitting device such as a light-emitting diode or the like can be given. As another display, the displaywhich displays characters on the display screen can be used. The light-emitting device is lit on every start timing or characters showing the start are displayed. By watching the display, the performer or the person who administrates the recording/transmission operates the keyboard or button and allows the start instructing unit 85 to generate the recording/transmission/performance start signal. The switch unit 73 is turned on by the recording/transmission/performance start signal and the reading of the AV data stored in the RAM 72 is started. The speaker reproduces audio information, buzzer, or the like indicative of the recording/transmission/performance start timing. The performer or the person who administrates the recording/transmission observes the display or listens to the audio information, the buzzer, or the like and presses the keyboard or button, so that the recording/transmission/performance is started.

A part or all of the data analyzing unit 83, start discriminating unit 84, and start instructing unit 85 can be also automatically executed by hardware processes or software processes without executing the artificial operation.

Although it is assumed that the viewer exists on the transmission/recording/performance place side in the construction of Fig. 7, it is also possible to construct the system in such a manner that the viewer is at a place on the reception side, the organism signal of the viewer or the start signal formed on the basis of the organism signal is transmitted from the reception side to the transmission side, and the transmission side starts the transmission of the AV signal synchronously with the start signal.

The invention is not limited to the embodiment of the invention mentioned above but many various modifications and applications are possible without departing from the scope of the spirit of the invention. For example, it is also possible to construct the system in such a manner that the better start timing is determined on the basis of the results of the viewing of several times in consideration of the relation with the organism signals of a plurality of viewers and registered as individual profile information of each viewer. It is also possible to store the profile information of a plurality of viewers into a non-volatile memory and enable the viewers to be switched.

As will be obviously understood from the above description, according to the invention, by controlling the start timing of the music piece, movement, or the like of the AV information in accordance with the organic information of the viewer, a situation synchronized with the actual performance or the breath, excitement degree, or the like upon acting can be reconstructed, and the AV system having the fairly larger liveliness than that in the conventional AV system can be constructed.

## Claims

1. A data reproduction instructing apparatus comprising:
reproducing means for reproducing data;
detecting means for detecting organic information; and
instructing means for instructing timing to start the reproduction of said data on the basis of said detected organic information.

2. A data reproduction instructing apparatus according to claim 1, wherein said data is at least either audio data or video data.

3. A data reproduction instructing apparatus according to claim 1, wherein said organic information is information showing at least one of a body motion, breath, heartbeat, and a pulsation.

4. A data reproduction instructing apparatus according to claim 1, wherein said instructing means is one of an audio sound, a buzzer, a light-emitting device, and a display.

5. A data reproduction apparatus according to claim 1, wherein
said detecting means detects a change point between an inspiratory period and an expiratory period of a respiratory movement, and
said instructing means instructs the timing to start the reproduction of said data when said change point is detected.

6. A data reproduction apparatus according to claim 1, wherein
said detecting means detects a pulsation, and
said instructing means instructs the timing to start the reproduction of said data on the basis of said pulsation.

7. A data reproducing apparatus comprising:
reproducing means for reproducing data;
detecting means for detecting organic information; and
control means for controlling timing to start the reproduction of said data on the basis of said detected organic information.

8. A data reproducing apparatus according to claim 7, wherein said data is at least either audio data or video data.

9. A data reproducing apparatus according to claim 7, wherein said organic information is information showing at least one of a body motion, breath, heartbeat, and a pulsation.

10. A data reproducing apparatus according to claim 7, wherein said instructing means is one of an audio sound, a buzzer, a light-emitting device, and a display.

11. A data reproducing apparatus according to claim 8, wherein
said reproduced data is constructed by a plurality of partial data, and
said control means controls the timing to start the reproduction of each of said partial data on the basis of said detected organic information.

12. A data reproducing apparatus according to claim 7, wherein said control means allows the reproduction to be started from an important portion of said data on the basis of said detected organic information.

13. A data reproducing apparatus according to claim 7, wherein
said detecting means detects a change point between an inspiratory period and an expiratory period of a respiratory movement, and
said control means allows the reproduction of said data to be started when said change point is detected.

14. A data reproducing apparatus according to claim 7, wherein
said detecting means detects a pulsation, and
said control means allows the reproduction of said data to be started when a maximum value of said pulsation is detected.

15. A data reproducing apparatus according to claim 7, further
comprising storing means for storing a plurality of organic information, and
wherein said control means allows said data to be reproduced on the basis of the organic information selected from said plurality of organic information.

16. A data transmission instructing apparatus comprising:
transmitting means for transmitting data;
detecting means for detecting organic information; and
instructing means for instructing timing to transmit said data on the basis of said detected organic information.

17. A data transmitting apparatus comprising:
transmitting means for transmitting data;
detecting means for detecting organic information; and
control means for controlling transmission timing to transmit said data on the basis of said detected organic information.

18. A data recording instructing apparatus comprising:
recording means for recording data onto a recording medium;
detecting means for detecting organic information; and
instructing means for instructing timing to record said data on the basis of said detected organic information.

19. A data recording apparatus comprising:
recording means for recording data onto a recording medium;
detecting means for detecting organic information; and
control means for controlling timing to record said data on the basis of said detected organic information.

20. A data recording apparatus according to claim 19, wherein said control means allows said recording means to record the organic information detected by said detecting means.

21. A data reproduction instructing method comprising the steps of:
detecting organic information when data is reproduced; and
instructing timing to reproduce said data on the basis of said detected organic information.

22. A data reproducing method comprising the steps of:
detecting organic information when data is reproduced; and
controlling reproduction timing to reproduce said data on the basis of said detected organic information.

23. A data recording instructing method comprising the steps of:
detecting organic information; and
instructing timing to record data on the basis of said detected organic information.

24. A data recording method comprising the steps of:
detecting organic information;
controlling timing to record data on the basis of said detected organic information; and
recording said data onto a recording medium on the basis of said timing.

25. A data recording method according to claim 24, wherein said detected organic information is recorded together with said data.
